# EUROPEAN PATENT APPLICATION

(11) **EP 3 992 795 A1**
(43) Date of publication of application: **04.05.2022**
(21) Application number: 20204596.9
(22) Date of filing: 29.10.2020
(51) Int. Cl.: G06F 9/54

(54) **COMPUTER SYSTEM EXECUTING MULTIPLE OPERATING SYSTEMS**

(71) Applicant: Jolla Ltd., 33210 Tampere (FI)
(72) Inventor: Haider, Franz-Josef, 33500 Tampere (FI); Saukko, Marko, 33950 Pirkkala (FI)
(74) Representative: Aaltonen, Janne Lari Antero

(57) **Abstract**

Disclosed is a computer system (200) comprising computing device (202) and computer hardware (228). The computing device is configured to execute: a first operating system (204) having first user space (208) and first kernel (216), first user space having first user space driver (210) and first kernel having first kernel driver (218); and a second operating system (206) having second user space (212) and second kernel (220), second user space having second user space driver (214) and second kernel having second kernel driver (222), wherein a functionality of each of first kernel driver and second kernel driver is merged to provide a functionality of a third kernel driver (226), third kernel driver being compatible with both first user space driver and second user space driver. The first operating system and the second operating system are capable of running simultaneously in a shared environment, third kernel driver is configured to provide first user space driver and second user space driver with access to computer hardware.

## Description

### TECHNICAL FIELD

The present disclosure relates generally to computer systems; and more specifically, to computer systems comprising computing devices executing multiple operating systems and computer hardware. Moreover, the present disclosure also relates to methods of using the aforesaid computer systems.

### BACKGROUND

Operating systems are system software that are responsible for the control and management of computer resources. Typically, an operating system enables communication between application software and hardware of a computing device. Specifically, the operating system allows the application software to access the hardware and basic system operations of the computing device, such as disk access, memory management, task scheduling, and user interfacing. Furthermore, the operating systems are responsible for providing network connectivity.

Notably, every operating system has its own set of features and drawbacks. Some operating systems may be full featured, with an extensive set of capabilities, while other operating systems may be capable of faster processing. Additionally, various applications may be written to be executed within one operating system but may not be supported by another operating system. Due to such variation in functionalities of the operating systems, a user may want to access functionality from two or more operating systems on a same computer hardware.

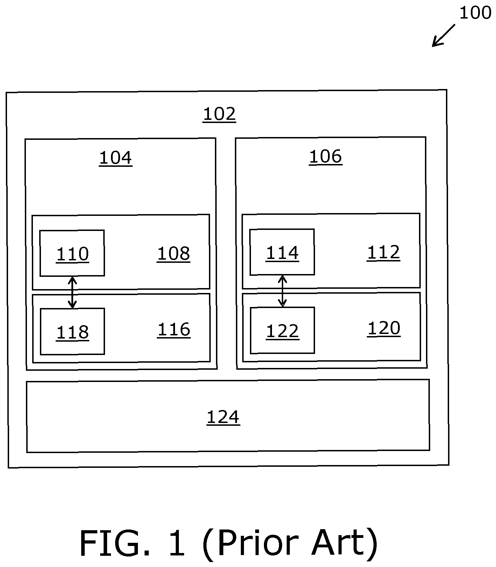

FIG. 1 (Prior Art) is a block diagram illustrating a conventional manner of executing two operating systems, namely a first operating system **104** and a second operating system **106** on a computing device **102** of a computer system **100.** Herein, the first operating system **104** has a first user space **108** and a first kernel **116**, the first user space **108** having a first user space driver **110** and the first kernel **116** having a first kernel driver **118.** Similarly, the second operating system **106** has a second user space **112** and a second kernel **120,** the second user space **112** having a second user space driver **114** and the second kernel **120** having a second kernel driver **122.** The first kernel driver **118** is configured to provide the first user space driver **110** with access to computer hardware **124** associated with the computing device **102.** The second kernel driver **122** is configured to provide the second user space driver **114** with access to the computer hardware **124** associated with the computing device **102.** Notably, user spaces, such as the first user space **108** and the second user space **112,** communicate with kernels, such as the first kernel **116** and the second kernel **120.** However, a user space driver and a kernel space driver are specific to a given operating system and are not compatible with drivers of other operating systems. For example, the first kernel driver **118** is not compatible with the second user space driver **114** and the second kernel driver **122** is not compatible with the first user space driver **110.**

Conventionally, solutions such as dual-boot, virtual machines, emulators and containers have been used to access functionality of two or more operating systems on a same computer hardware. However, such conventional solutions do not support hardware acceleration while providing simultaneous access of hardware features to the operating systems. Furthermore, solutions such as dual-boot allow functioning of two operating systems on one computer hardware but do not provide concurrent access to both the operating systems. In a computer system employing a hosted virtual machine, a guest operating system runs on a virtual machine in a host operating system, thereby allowing concurrent access of computer hardware to both the operating system. However, performance of the computer system using the hosted virtual machine is significantly reduced due to virtualization of hardware resources for the guest operating system. Another method of providing access to the computer hardware to multiple operating systems involves using wrappers or inter-process communication (IPC) between drivers. However, such methods significantly increase complexity and often drastically reduce performance as many kernel drivers are only available in binary form and cannot be modified.

Therefore, in light of the foregoing discussion, there exists a need to overcome the aforementioned drawbacks associated with conventional methods to access functionality of two or more operating systems on a same computer hardware.

### SUMMARY

The present disclosure seeks to provide a computer system executing multiple operating systems. The present disclosure also seeks to provide a method of using a computer system. The present disclosure seeks to provide a solution to the existing problems of driver incompatibility, limited hardware access and considerable performance overhead in conventional solutions for using multiple operating systems on a same computer system. An aim of the present disclosure is to provide a solution that overcomes at least partially the problems encountered in prior art, and provide a computer system that supports simultaneous execution of multiple operating systems and enable the multiple operating systems to access the same underlying computer hardware without considerable performance penalty.

In one aspect, an embodiment of the present disclosure provides a computer system comprising:
- a computing device configured to execute:
   - a first operating system, wherein the first operating system has a first user space and a first kernel, the first user space having a first user space driver and the first kernel having a first kernel driver; and
   - a second operating system, wherein the second operating system has a second user space and a second kernel, the second user space having a second user space driver and the second kernel having a second kernel driver,
   wherein a functionality of each of the first kernel driver and the second kernel driver is merged to provide a functionality of a third kernel driver, the third kernel driver being compatible with both the first user space driver and the second user space driver; and
- computer hardware associated with the computing device,
wherein the first operating system and the second operating system are capable of running simultaneously in a shared environment, the third kernel driver is configured to provide the first user space driver and the second user space driver with access to the computer hardware.

In another aspect, an embodiment of the present disclosure provides a method of using a computer system, the computer system comprising
- a computing device configured to execute:
   - a first operating system, wherein the first operating system has a first user space and a first kernel, the first user space having a first user space driver and the first kernel having a first kernel driver; and
   - a second operating system, wherein the second operating system has a second user space and a second kernel, the second user space having a second user space driver and the second kernel having a second kernel driver; and
- computer hardware associated with the computing device,
   the method comprising
- merging a functionality of each of the first kernel driver and the second kernel driver to provide a functionality of a third kernel driver, the third kernel driver being compatible with both the first user space driver and the second user space driver; and
- arranging the first operating system and the second operating system to run simultaneously in a shared environment, wherein the third kernel driver provides the first user space driver and the second user space driver with access to the computer hardware.

Embodiments of the present disclosure substantially eliminate or at least partially address the aforementioned problems in the prior art, and enable execution of multiple operating systems on a same computer system having same underlying computer hardware, even when the multiple operating systems have incompatible user spaces, by suitably modifying functionality of kernel drivers of the multiple operating systems.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 (Prior Art) is a block diagram illustrating a conventional manner of executing two operating systems on a computing device of a computer system;
FIG. 2A is a block diagram illustrating a computer system, while FIG. 2B is a block diagram depicting merging functionality of a first kernel driver and a second kernel driver, in accordance with an embodiment of the present disclosure; and
FIG. 3 is a flowchart depicting steps of a method of using a computer system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a computer system comprising:
- a computing device configured to execute:
   - a first operating system, wherein the first operating system has a first user space and a first kernel, the first user space having a first user space driver and the first kernel having a first kernel driver; and
   - a second operating system, wherein the second operating system has a second user space and a second kernel, the second user space having a second user space driver and the second kernel having a second kernel driver,
   wherein a functionality of each of the first kernel driver and the second kernel driver is merged to provide a functionality of a third kernel driver, the third kernel driver being compatible with both the first user space driver and the second user space driver; and
- computer hardware associated with the computing device, wherein the first operating system and the second operating system are capable of running simultaneously in a shared environment, the third kernel driver is configured to provide the first user space driver and the second user space driver with access to the computer hardware.

In another aspect, an embodiment of the present disclosure provides a method of using a computer system, the computer system comprising
- a computing device configured to execute:
   - a first operating system, wherein the first operating system has a first user space and a first kernel, the first user space having a first user space driver and the first kernel having a first kernel driver; and
   - a second operating system, wherein the second operating system has a second user space and a second kernel, the second user space having a second user space driver and the second kernel having a second kernel driver; and
- computer hardware associated with the computing device,
   the method comprising
- merging a functionality of each of the first kernel driver and the second kernel driver to provide a functionality of a third kernel driver, the third kernel driver being compatible with both the first user space driver and the second user space driver; and
- arranging the first operating system and the second operating system to run simultaneously in a shared environment, wherein the third kernel driver provides the first user space driver and the second user space driver with access to the computer hardware.

The present disclosure provides the aforesaid computer system and the aforesaid method. The computer system supports the execution of multiple operating systems (such as the first operating system and the second operating system) on the same computing device. The first operating system and the second operating system simultaneously access the same computer hardware, even when said operating systems have different user spaces. The functionality of the first kernel driver and the second kernel driver is effectively merged to provide the functionality of the third kernel driver, in a manner that the third kernel driver is compatible with both the first user space driver and the second user space driver. The third kernel driver provides the first operating system and the second operating system with access to the computer hardware without considerable performance penalty.

Throughout the present disclosure, the term *"computer system"* refers to a system that is capable of performing computing tasks. The computer system comprises the computing device and the computing hardware. It will be appreciated that the computer system could comprise a plurality of computing devices and multiple computing hardware.

The term *"computing device"* refers to an electronic device that is capable of processing data and/or information. The computing device may or may not be portable. Examples of computing devices include, but are not limited to, desktop computers, laptop computers, tablet computers, phablet computers, personal digital assistants, smartphones, and smart devices (for example, such as smart watches, smart locks, smart televisions).

Pursuant to embodiments of the present disclosure, the computing device is configured to execute at least two operating systems. An *"operating system"* is a software that enables a user to run applications on the computing device. A given operating system manages hardware, software and the applications on the computing device, by performing tasks such as file management, device management, memory management, process management, and the like. The given operating system serves as an interface between the user of the computer system and the computer hardware. The terms *"first operating system"* and *"second operating system"* are used herein to distinguish between different operating systems that are executed on the computing device. Examples of the first operating system and/or the second operating system include, but are not limited to, a Microsoft Windows^{®} operating system, an Apple Macintosh^{®} operating system (macOS), a Linux^{®} operating system, a Linux-based operating system, an Android^{®} operating system, and an Apple iOS^{®}.

A given operating system has a given user space and a given kernel space. System memory of the computer system is divided between the given user space and the given kernel space. The given user space is that portion of the system memory in which user processes run, whereas the given kernel space is that portion of the system memory in which a given kernel runs. The given user space provides functionality to the user. A given user space driver runs in the given user space, whereas a given kernel driver runs in the given kernel space. The given user space driver enables communication of the given user space with the given kernel space. Typically, the given user space driver is available in binary form, and cannot be modified. Some user space drivers are adapted for enabling communication with only one specific kernel. The given kernel driver is a kernel module (notably, a software module running in the given kernel space) of the given kernel. Typically, the given kernel driver enables access between the given kernel space and the given user space, via a given kernel space-given user space interface. Moreover, the given kernel driver is configured to control the computer hardware associated with the computing device. Typically, every user process eventually employs the computer hardware. The given kernel driver has embedded therein device driver(s) for the computer hardware. The given kernel driver provides the given user space driver with access to the computer hardware.

It will be appreciated that both the first operating system and the second operating system can be executed on the computing device simultaneously (namely, concurrently). Pursuant to embodiments of the present disclosure, the user can switch between said operating systems on the fly. Notably, the first operating system and the second operating system are not binary compatible. In other words, the first operating system and the second operating system are ABI (Application Binary Interface)-incompatible.

Optionally, the first operating system and the second operating system have independent and incompatible user libraries and/or framework layers. Optionally, the first user space driver and the second user space driver are built against different libraries and are incompatible with each other. Therefore, the first user space driver cannot be utilized within an environment of the second operating system, and vice versa.

The first kernel driver is compatible with the first user space driver and the second kernel driver is compatible with the second user space driver. By merging the functionality of the first kernel driver and the second kernel driver into the functionality of the third kernel driver, their existing kernel driver interfaces are extended in a manner that the third kernel driver is compatible with both the first user space driver and the second user space driver. Typically, a given kernel driver is adapted for enabling access between the given kernel space and the given user space, via a given kernel space-given user space interface.

In an embodiment, in order to provide the functionality of the third kernel driver, the first kernel driver is modified to include the functionality of the second kernel driver. In another embodiment, in order to provide the functionality of the third kernel driver, the second kernel driver is modified to include the functionality of the first kernel driver.

It will be appreciated that typically user space drivers are not available for modification. In general practice, source code for kernels is publicly available, as the kernels are typically a public part of operating systems. Therefore, the functionality of the first kernel driver and the second kernel driver can be modified as described above, to accommodate functionality needed for user space drivers of different operating systems on the computing device.

Optionally, the third kernel driver runs on a third kernel, the third kernel being a modification of the first kernel or the second kernel such that the functionality of one of the first kernel driver or the second kernel driver is modified to include the functionality of the other of the first kernel driver or the second kernel driver. The third kernel driver is compatible with all user space drivers (notably, the first user space driver and the second user space driver) at the same time. An interface of the third kernel driver enables both the first operating system and the second operating system to interface to the third kernel. This allows good performance of the computer system. Moreover, this provides the ability to use existing binary first and second user space drivers without requiring vendors of said user space drivers to disclose confidential information for system-specific modifications, or to implement any modifications to said user space drivers.

Throughout the present disclosure, the term *"computer hardware"* refers to physical components associated with the computing device. Examples of computer hardware include at least one of, but are not limited to, a graphics card, a sound card, speakers, a monitor, an input device (for example, such as a mouse, a keyboard, a stylus, and the like), a computer data storage (for example, such as a disk drive, a Universal Serial Bus (USB) drive, a memory card, and the like), a power supply unit, and a printer.

The first operating system and the second operating system are capable of running simultaneously in a shared environment. The third kernel driver is configured to provide the first user space driver and the second user space driver with access to the computer hardware. In other words, the same underlying computer hardware is shared by the first user space driver and the second user space driver. The third kernel driver provides said access without requiring virtualization of the computer hardware, and without a need to employ wrappers on top of existing computer hardware drivers.

In an example, the first operating system may be a Linux-based operating system (for example, such as Sailfish operating system), whereas the second operating system may be the Android operating system. In such an example, the third kernel enables use of both android applications and sailfish applications on the same computer system.

Optionally, the third kernel driver provides hardware accelerated access to a given functionality of a given operating system. In other words, the given functionality of the given operating system is optionally implemented on the computer hardware. Optionally, the given functionality is a hardware-specific functionality. Examples of the hardware-specific functionality include, but are not limited to, a graphics processing functionality, a communicative functionality, an input obtaining functionality, and an output provisioning functionality. It will be appreciated that the given functionality is not limited to only the hardware-specific functionality, and may be any functionality (for example, such as an audio processing functionality, a video processing functionality, and the like). It will be appreciated that providing hardware accelerated access enables the computer system to decrease latency and increase its throughput.

The computer system is capable of running the first operating system and the second operating system simultaneously on the same computer hardware, even when said operating systems have different user spaces. The third kernel driver efficiently provides said operating systems with access to the computer hardware, without any major performance penalty. Moreover, the third kernel driver does not require access to source codes of the first user space driver and the second user space driver. Beneficially, the computer system enables prototyping and demonstration of computer technology (for example, such as software applications) for multiple operating systems, without requiring major investments or commitments.

In an embodiment, when the first user space driver and the second user space driver access the third kernel driver via a same path, and when attributes of a first parameter passed by the first user space driver to the third kernel driver are different from attributes of a second parameter passed by the second user space driver to the third kernel driver, a handler associated with the third kernel driver is employed to:
- determine which of the first user space driver and the second user space driver made a call to the third kernel driver, based on differences in the attributes of the first parameter and the attributes of the second parameter; and
- provide the functionality of a corresponding kernel driver via the third kernel driver.

The term *"handler"* refers to a software routine which is specialized in a certain task. The handler associated with the third kernel is, for example, an event handler which selects any one of the parameters passed by the first user space driver and the second user space driver, upon receiving system calls from the first user space driver and the second user space driver. The system calls (namely, syscalls) serve as an interface through which applications executing in the first user space and the second user space request services from the third kernel driver.

Optionally, both the first user space driver and the second user space driver access the third kernel driver via the same path, to access the computer hardware. In such a case, the system calls pertain to device management services. Device management services encompass hardware management services, for example, such as requesting for a hardware resource, operating the hardware resource in a required manner, and the like. In an example, both the first user space driver and the second user space driver access the third kernel driver via a given user space path (/dev/driver path).

It will be appreciated that system calls from the first user space driver and system calls from the second user space driver can be easily distinguished by the handler, as the attributes of the first parameter passed by the first user space driver to the third kernel driver are often different from the attributes of the second parameter passed by the second user space driver to the third kernel driver.

Optionally, the attributes of the first parameter and the attributes of the second parameter are selected from a group comprising: a data size, a data type, a data order. It will be appreciated that the aforesaid group is non-exhaustive, and other attributes of the parameters may also be employed.

Optionally, a data size of a given parameter is one of: 8 bits, 16 bits, 32 bits, 64 bits. As an example, the data size of the first parameter could be 16 bits, whereas the data size of the second parameter could be 32 bits. Thus, differences in the data sizes enable the handler to determine which user space driver has made the call and provide the functionality of a corresponding kernel driver via the third kernel driver.

Likewise, differences in the data type enable the handler to determine which user space driver has made the call and provide the functionality of a corresponding kernel driver via the third kernel driver. Optionally, a data type of the given parameter is one of: a basic data type, a composite data type. Examples of the basic data type include, but are not limited to, an integer data type, a float data type, and a character data type. Examples of the composite data type include, but are not limited to, a pointer data type, an array data type, a structure data type, a union data type, and a function data type.

Moreover, an order in which first parameters are passed by the first user space driver may be different from an order in which second parameters are passed by the second user space driver. Thus, differences in the data order enable the handler to determine which user space driver has made the call and provide the functionality of its corresponding kernel driver via the third kernel driver. In an example, the first user space driver may pass parameters A and B to the third kernel driver in the order: A, B.

However, the second user space driver may also pass parameters A and B to the third kernel driver, but in the order: B, A. In such a case, the data order of the parameters passed by the first user space driver and the second user space driver is different. In such a case, a manner in which the parameters A and B are popped from a system stack depends on the selection of the parameters by the handler. When the handler selects the parameters A and B passed by the first user space driver, said parameters are popped from the system stack in the order: A, B. Alternatively, when the handler selects the parameters A and B passed by the second user space driver, said parameters are popped from the system stack in the order: B, A.

In another embodiment, when the first user space driver and the second user space driver access the third kernel driver via a first path and a second path, respectively, the handler associated with the third kernel driver is employed to:
- determine which of the first user space driver and the second user space driver made a call to the third kernel driver, based on at least one symbolic link provided in a given path; and
- provide the functionality of a corresponding kernel driver via the third kernel driver.

Thus, a given symbolic link enables the handler to associate a given call (to the third kernel driver) made by a given user space driver with a functionality of a corresponding kernel driver as provided by the third kernel driver.

Optionally, in this regard, the first user space driver and the second user space driver access the third kernel driver via different paths. In other words, the first and second user space drivers are registered to access the third kernel via different paths. In the first user space and the second user space, the selection between the first user space driver and the second user space driver is made by the at least one symbolic link in the first path and the second path (which are present in the first user space and the second user space, respectively). Notably, the at least one symbolic link has: a link from the first user space driver in the first user space to the third kernel driver in the third kernel, a link from the second user space driver in the second user space to the third kernel driver in the third kernel. In other words, the at least one symbolic link is adapted to link different user spaces (such as the first user space and the second user space) with a common kernel space of the third kernel. The at least one symbolic link effectively enables the third kernel driver to provide the first user space driver and the second user space driver with access to the computer hardware.

As an example, the first path via which the first user space driver is registered to access the third kernel driver may be /dev/driver1 path, whereas the second path via which the second user space driver is registered to access the third kernel driver may be /dev/driver2 path. The third kernel driver may be accessed in the third kernel by a /dev/driver path. The at least one symbolic link has a link from the /dev/driver1 path in the first user space to the /dev/driver path in the third kernel, and a link from the /dev/driver2 path in the second user space to the /dev/driver path in the third kernel.

Optionally, the computer system further comprising at least one storage medium for storing the first operating system and the second operating system. Optionally, the at least one storage medium is a non-volatile storage medium. Optionally, the at least one storage medium is implemented as a hard disk drive of the computer system. In some embodiments, the hard disk drive is arranged as an internal component of the computing device, whereas in other embodiments, the hard disk drive is arranged as an external component of the computing device.

The present disclosure also relates to the method as described above. Various embodiments and variants disclosed above, with respect to the aforementioned first aspect, apply mutatis mutandis to the method.

Optionally, the third kernel driver runs on a third kernel, the third kernel being a modification of the first kernel or the second kernel such that the functionality of one of the first kernel driver or the second kernel driver is modified to include the functionality of the other of the first kernel driver or the second kernel driver.

In an embodiment, when the first user space driver and the second user space driver access the third kernel driver via a same path, and when attributes of a first parameter passed by the first user space driver to the third kernel driver are different from attributes of a second parameter passed by the second user space driver to the third kernel driver, the method comprises employing a handler associated with the third kernel driver to:
- determine which of the first user space driver and the second user space driver made a call to the third kernel driver, based on differences in the attributes of the first parameter and the attributes of the second parameter; and
- provide the functionality of a corresponding kernel driver via the third kernel driver.

Optionally, the attributes of the first parameter and the attributes of the second parameter are selected from a group comprising: a data size, a data type, a data order.

In another embodiment, when the first user space driver and the second user space driver access the third kernel driver via a first path and a second path, respectively, the method comprises employing the handler associated with the third kernel driver to:
- determine which of the first user space driver and the second user space driver made a call to the third kernel driver, based on at least one symbolic link provided in a given path; and
- provide the functionality of a corresponding kernel driver via the third kernel driver.

Optionally, the method further comprising storing the first operating system and the second operating system in at least one storage medium.

### EXAMPLES

Example 1. Hereinbelow, there is provided an exemplary program (in C programming language) pursuant to an embodiment wherein the first user space driver and the second user space driver access the third kernel driver via the same path.

```
 // K1 (for functionality of first kernel driver)
 struct userspace_type_KD1 {
  // datatypes are only examples
   u32 varl;
   u64 var2;
   void *var3;
   ...
 };
 void handler_kd1(userspace_input) {
  userspace_type_KD1 data;
   copy userspace_input into data;
   process data
 }
   // K2 (for functionality of second kernel driver)
 struct userspace_type_KD2 {
  // datatypes are only examples
   u64 varl;
   u64 var2;
   void *var3;
 ...
 };
 void handler_kd2(userspace_input) {
   userspace_type_KD2 data;
   copy userspace_input into data;
   process data
 }
   // K3 (third kernel driver with merged functionalities)
   // have both userspace datatypes userspace_type_KD1 and
 userspace_type_KD2
 void handler_kd1_kd2(userspace_input) {
   userspace_type_KD1 data1;
   userspace_type_KD2 data2;
   if input_size == sizeof (userspace_type_KD1)
     copy userspace_input into data1;
   if input_size == sizeof (userspace_type_KD2)
     copy userspace_input into data2;
   process data1 or data2 depending on input_size
 }
```

Example 2. Hereinbelow, there is provided an exemplary program (in C programming language) pursuant to an embodiment wherein the first user space driver and the second user space driver access the third kernel driver via the first path and the second path, respectively.

```
 // K1 (for functionality of first kernel driver)
 struct userspace_type_KD1 {
  // datatypes are only examples
   u32 varl;
   u64 var2;
   void *var3;
   ...
 };
 void init_kd1()
 {
   register_userspace_device("device_kd1");
 }
   void handler_kdl(userspace_input) {
   userspace_type_KD1 data;
   copy userspace_input into data;
   process data
 }
   // K2 (for functionality of second kernel driver)
 struct userspace_type_KD2 {
 // datatypes are only examples
   u64 varl;
   u64 var2;
   void *var3;
 ...
 };
 void init_kd2()
 {
   register_userspace_device("device_kd2");
 }
 void handler_kd2(userspace_input) {
   userspace_type_KD2 data;
   copy userspace_input into data;
   process data
 }
   // K3 (third kernel driver with merged functionalities)
   // have both userspace datatypes here
   void init_kd1_kd2()
 {
   register_userspace_device("device_kd1");
   register_userspace_device("device_kd2");
 }
   void dispatch()
 {
   if input from "device_kd1" call handler_kd1
   if input from "device_kd2" call handler_kd2
 }
```

### DETAILED DESCRIPTION OF THE DRAWINGS

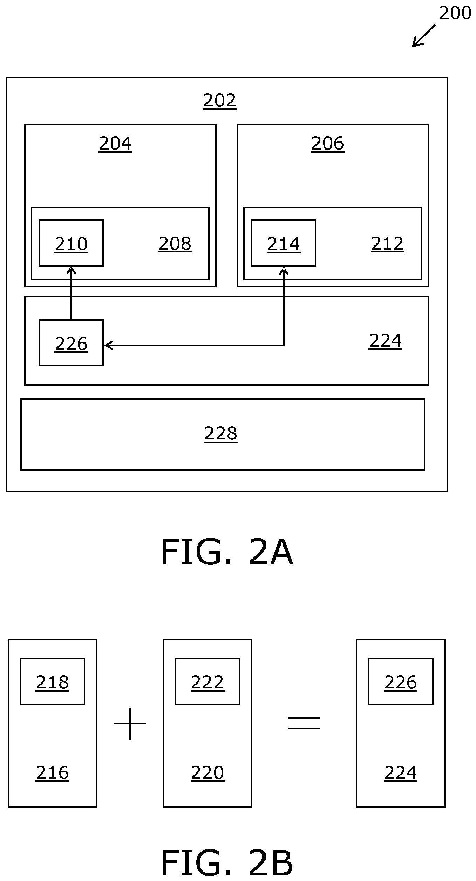

Referring to FIGs. 2A and 2B, in FIG. 2A there is shown a block diagram illustrating a computer system **200**, while in FIG. 2B there is shown a block diagram depicting merging functionality of a first kernel driver **218** and a second kernel driver **222**, in accordance with an embodiment of the present disclosure.

The computer system **200** comprises a computing device **202** configured to execute a first operating system **204** and a second operating system **206,** and computer hardware **228** associated with the computing device **202.** The first operating system **204** has a first user space **208** and a first kernel **216.** The first user space **208** has a first user space driver **210,** and the first kernel **216** has a first kernel driver **218.** The second operating system **206** has a second user space **212** and a second kernel **220.** The second user space **212** has a second user space driver **214,** and the second kernel **220** has a second kernel driver **222.** As shown in FIG. 2B, a functionality of each of the first kernel driver **218** and the second kernel driver **222** is merged to provide a functionality of a third kernel driver **226** on a common kernel, depicted as a third kernel **224.** The third kernel driver **226** is compatible with both the first user space driver **210** and the second user space driver **214.** The first operating system **204** and the second operating system **206** are capable of running simultaneously in a shared environment, the third kernel driver **226** is configured to provide the first user space driver **210** and the second user space driver **214** with access to the computer hardware **228.**

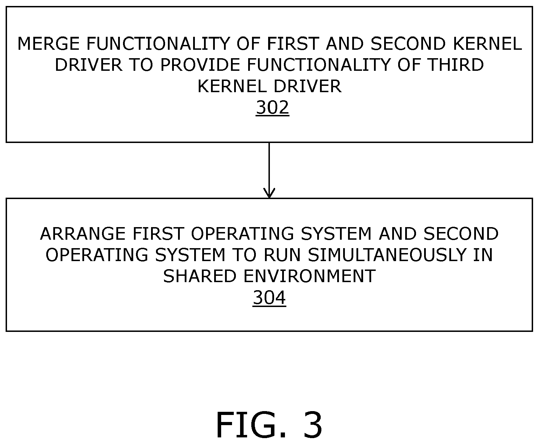

Referring to FIG. 3, there is shown a flowchart depicting steps of a method of using a computer system, in accordance with an embodiment of the present disclosure. The computer system comprises a computing device configured to execute a first operating system and a second operating system, and computer hardware associated with the computing device. The first operating system has a first user space and a first kernel. The first user space has a first user space driver, and the first kernel has a first kernel driver. The second operating system has a second user space and a second kernel, the second user space having a second user space driver and the second kernel having a second kernel driver.

At a step **302,** a functionality of each of the first kernel driver and the second kernel driver is merged to provide a functionality of a third kernel driver. The third kernel driver is compatible with both the first user space driver and the second user space driver. At a step **304,** the first operating system and the second operating system are arranged to run simultaneously in a shared environment. The third kernel driver provides the first user space driver and the second user space driver with access to the computer hardware.

The steps **302** and **304** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A computer system (200) comprising:
- a computing device (202) configured to execute:
- a first operating system (204), wherein the first operating system has a first user space (208) and a first kernel (216), the first user space having a first user space driver (210) and the first kernel having a first kernel driver (218); and
- a second operating system (206), wherein the second operating system has a second user space (212) and a second kernel (220), the second user space having a second user space driver (214) and the second kernel having a second kernel driver (222),
wherein a functionality of each of the first kernel driver and the second kernel driver is merged to provide a functionality of a third kernel driver (226), the third kernel driver being compatible with both the first user space driver and the second user space driver; and
- computer hardware (228) associated with the computing device,
wherein the first operating system and the second operating system are capable of running simultaneously in a shared environment, the third kernel driver is configured to provide the first user space driver and the second user space driver with access to the computer hardware.

2. The computer system (200) according to claim 1, wherein the third kernel driver (226) runs on a third kernel (224), the third kernel being a modification of the first kernel (216) or the second kernel (220) such that the functionality of one of the first kernel driver (218) or the second kernel driver (222) is modified to include the functionality of the other of the first kernel driver or the second kernel driver.

3. The computer system (200) according to claim 1 or 2, wherein when the first user space driver (210) and the second user space driver (214) access the third kernel driver (226) via a same path, and when attributes of a first parameter passed by the first user space driver to the third kernel driver are different from attributes of a second parameter passed by the second user space driver to the third kernel driver, a handler associated with the third kernel driver is employed to:
- determine which of the first user space driver and the second user space driver made a call to the third kernel driver, based on differences in the attributes of the first parameter and the attributes of the second parameter; and
- provide the functionality of a corresponding kernel driver via the third kernel driver.

4. The computer system (200) according to claim 3, wherein the attributes of the first parameter and the attributes of the second parameter are selected from a group comprising: a data size, a data type, a data order.

5. The computer system (200) according to claim 1 or 2, wherein when the first user space driver (210) and the second user space driver (214) access the third kernel driver (226) via a first path and a second path, respectively, a handler associated with the third kernel driver is employed to:
- determine which of the first user space driver and the second user space driver made a call to the third kernel driver, based on at least one symbolic link provided in a given path; and
- provide the functionality of a corresponding kernel driver via the third kernel driver.

6. The computer system (200) according to any of the preceding claims, further comprising at least one storage medium for storing the first operating system (204) and the second operating system (206).

7. A method of using a computer system (200), the computer system comprising
- a computing device (202) configured to execute:
- a first operating system (204), wherein the first operating system has a first user space (208) and a first kernel (216), the first user space having a first user space driver (210) and the first kernel having a first kernel driver (218); and
- a second operating system (206), wherein the second operating system has a second user space (212) and a second kernel (220), the second user space having a second user space driver (214) and the second kernel having a second kernel driver (222); and
- computer hardware (228) associated with the computing device,
the method comprising
- merging a functionality of each of the first kernel driver and the second kernel driver to provide a functionality of a third kernel driver (226), the third kernel driver being compatible with both the first user space driver and the second user space driver; and
- arranging the first operating system and the second operating system to run simultaneously in a shared environment, wherein the third kernel driver provides the first user space driver and the second user space driver with access to the computer hardware.

8. The method according to claim 7, wherein the third kernel driver (226) runs on a third kernel (224), the third kernel being a modification of the first kernel (216) or the second kernel (220) such that the functionality of one of the first kernel driver (218) or the second kernel driver (222) is modified to include the functionality of the other of the first kernel driver or the second kernel driver.

9. The method according to claim 7 or 8, wherein when the first user space driver (210) and the second user space driver (214) access the third kernel driver (226) via a same path, and when attributes of a first parameter passed by the first user space driver to the third kernel driver are different from attributes of a second parameter passed by the second user space driver to the third kernel driver, the method comprises employing a handler associated with the third kernel driver to:
- determine which of the first user space driver and the second user space driver made a call to the third kernel driver, based on differences in the attributes of the first parameter and the attributes of the second parameter; and
- provide the functionality of a corresponding kernel driver via the third kernel driver.

10. The method according to claim 9, wherein the attributes of the first parameter and the attributes of the second parameter are selected from a group comprising: a data size, a data type, a data order.

11. The method according to claim 7 or 8, wherein when the first user space driver (210) and the second user space driver (214) access the third kernel driver (226) via a first path and a second path, respectively, the method comprises employing a handler associated with the third kernel driver to:
- determine which of the first user space driver and the second user space driver made a call to the third kernel driver, based on at least one symbolic link provided in a given path; and
- provide the functionality of a corresponding kernel driver via the third kernel driver.

12. The method according to any of the claims 7-11, further comprising storing the first operating system (204) and the second operating system (206) in at least one storage medium.
